# EUROPEAN PATENT SPECIFICATION

(11) **EP 0 720 507 B1**
(45) Date of publication and mention of the grant of the patent: **13.02.2002**
(21) Application number: 93920983.9
(22) Date of filing: 21.09.1993
(51) Int. Cl.: B01D 35/18

(54) **FLUID FILTER DEVICE**
FLÜSSIGKEITSFILTERVORRICHTUNG
DISPOSITIF A FILTRE POUR FLUIDE

(43) Date of publication of application: 10.07.1996
(73) Proprietor: CLEANBURN LIMITED, Milton Keynes, Buckinghamshire MK8 9DN (GB)
(72) Inventor: WILCOX, Steven, Ian 111 Daniels Welch Coffee Hall, Buckinghamshire MK6 5DA (GB); WILCOX, James, Robert, Buckinghamshire MK8 9DN (GB)
(74) Representative: Britter, Keith Palmer
(86) International application number: GB9301986
(87) International publication number: WO9508384

(56) References cited:
- EP-A- 0 106 736
- WO-A-80/00222
- FR-A- 2 598 749
- GB-A- 2 140 316
- US-A- 4 388 185

## Description

This invention relates to a device for filtering oil and is especially, but not exclusively, related to such a device for filtering diesel oil being supplied to a diesel engine of, say, a vehicle.

Diesel oil is obtained from crude oil in substantially the same manner as most other petroleum by-products distilled therefrom. Each such by-product has its own boiling point and is obtained by separating it from the other components of the crude oil by condensing it from the main crude distillate at a predetermined temperature.

Unfortunately, the modern technology associated with the refining of crude oil has failed to isolate many of the hydrocarbons at each distillation stage and, as a consequence, diesel oil is collected as a condensate contaminated with unwanted particles.

Efforts to remove these unwanted particles by, say, heating or chemical action have been substantially unsuccessful, in that the chemical composition and/or physical properties of the diesel oil itself are changed.

Although the unwanted particles in diesel oil are extremely small, they still tend to have an abrasive effect on the various components, such as, injectors, exhausts valves, pistons and cylinder walls, of diesel engines. Also, as these particles tend not to bum with the diesel oil during the combustion process, the power ratios of the diesel engines are correspondingly decreased and the level of harmful exhaust emissions is increased.

If these undesirable effects of unwanted particles in diesel oil could be overcome, then diesel engines could be redesigned in lighter materials, such as, aluminium alloys, rather than using the heavy cast iron blocks and heads of existing diesel engines.

In WO 80/00222 (Thompson), there is disclosed an industrial oil reconditioning system including a heater for heating dirty oil to a temperature of, say, 43°C prior to the oil being passed through a three-stage filter and, also, a heater downstream of the filter for vaporising contaminant fluids from the previously-filtered oil.

EP-A-0106736 (Fram Corp.) describes a diesel oil filter in the form of a separating device, having a pre-filter heater for heating the oil to a low but unspecified temperature prior to its being passed through the device.

In FR-A-2598749(Raychem Corp.), there is disclosed a method of and apparatus for heating diesel fuel to an unspecified temperature prior to its passage through a unitary filter device.

Such pre-filter heating described in these prior art oil filter systems, is concerned generally with the reduction and possible elimination of waxing, such as the melting of paraffins, within the oil prior to its being passed through the filter, to prevent or reduce blocking thereof but does not take into account the removal of undesirable and volatilisable contaminants from the oil to be filtered. Thus, each of these prior art filtering systems generally comprises filter means through which oil, such as diesel oil or industrial oil, to be filtered is passable and primary heating means located upstream of the filter means, whilst their associated methods generally comprise heating the oil prior to its being filtered.

The presently inventive oil filter device, however, is distinguished from the prior art oil filtering systems discussed above and, thus, is characterised by secondary heating means for further heating of the oil and by at least the filter means, primary heating means and/or the secondary heating means, as the case may be, being located in generally separate compartments in a housing of the device, the compartments being in communication with each other to permit the passage of the oil therethrough.

Correspondingly, the inventive method is distinguished from the prior art filtering methods by heating the oil further in secondary heating means within a unitary structure containing the primary and secondary heating means, as well as the filter means, with at least the filter means, primary heating means and secondary heating means being provided in generally separate compartments in a housing, the compartments being in communication with each other, to permit passage of oil therethrough.

Thus, the present invention provides an oil filter device and associated method which overcome, or at least substantially reduce, the disadvantages associated with the filtering of existing particle-contaminated diesel oil, as well as other types of fuel and lubricating oil which are similarly contaminated, so that diesel engines, as well as other equipment, such as, other types of internal combustion engine, oil pumps and the like, can be redesigned to be more efficient and cost effective.

Preferably the primary heating means is arranged to heat the oil to a temperature of approximately 120°C to 250°C prior to the oil being passed through the filter means.

The inventive oil filter device may include means arranged to exhaust any undesirable and volatilised material from the device.

The secondary heating means may be located upstream or downstream of the filter means.

In an embodiment, the secondary heating means is also arranged to volatilise any undesirable material present in the oil, for subsequent removal from the filter device, preferably by heating the oil to a temperature of approximately 120°C to 250°C.

The compartments housing at least the filter means, primary heating means and/or secondary heating means are preferably thermally insulated. The filter means is preferably graduated to filter out particles of decreasing size from the oil, such graduated filter means preferably comprising discrete regions of given mesh size or a mass of filter material of continuously decreasing mesh size.

A moisture-absorbing material can be associated with the device for removing substantially all of any water or moisture in the oil being filtered, and is preferably in the form of a replaceable gauze thereof.

The interior of the device may be pressurised and, as indicated above, the filter device is of a unitary structure which, when in the form of a diesel oil filter device, can be inserted as a preformed unit in the fuel line between the diesel oil tank and associated diesel engine, rather than having separately located heating means and filter means, as in the case of prior art arrangements, where a heater is provided in the diesel oil or other fluid tank and is quite separate from any filter device for the oil.

Any steam and/or other volatilisable liquids boiled-off from the diesel oil in the filter device may be exhausted to the atmosphere or cooling system of the associated diesel engine.

As indicated above also, the predetermined temperature level at which the previously-heated and -filtered oil is maintained, may be a specific predetermined temperature or one which lies within a predetermined range of temperatures, such temperature being compatible with the operating temperature of any apparatus which is associated with the inventive filter device downstream thereof In the case of the inventive device being one for filtering diesel oil, for example, that associated apparatus might be a diesel engine injector system or pump.

In order that the invention may be more fully understood, a preferred embodiment of diesel oil filter device will now be described by way of example and with reference to the accompanying drawing in which:
Figure 1 is a plan view of a filter device; and
Figure 2 is a sectional elevation of the filter device shown in Figure 1 along the line II-II thereof;
Referring to the drawing, an embodiment of a diesel oil filter device of unitary structure for incorporation in the fuel line of a diesel-engine vehicle, such as, a truck, is indicated generally at 101 and is used for the filtration of medium to heavy diesel oil having a viscosity range of 0.880 to 0.990 cm²/sec.

A filter housing 102 of mild steel, aluminium alloy or similar material, has a central compartment 103 which is of generally rectangular cross-section and in which is supported a body 104 of suitable filter material, such as, a multigrade single woven polypropylene filter medium of descending porosity. For medium grade diesel oils, the porosity of the filter material is preferably 5.0 to 0.5 microns and for heavy grade diesel oils, 10.0 to 1.0 microns.

The filter body 104 is supported in the compartment 103 between the upper end of a duct 105, which connects the central compartment 103 to another compartment 123 to be described below, and a compression spring 106 acting between the top of the filter body 104 and the inside wall of a cover 108 of the housing 102.

Secured by any suitable means to the top of the filter housing 102 is the cover 108 and a heating element, shown diagrammatically at 113', is located in a first, end (left) compartment 113 of the filter device housing 102 of generally semi-circular cross-section.

An inlet 111 for medium or heavy grade diesel oil is provided in the bottom region of the outer wall of the housing 102 and communicates with the interior of the heating element compartment 113 which, in turn, communicates with the central filter compartment 103 via an aperture 109 in the upper region of an associated dividing wall 110.

Another heating element shown diagrammatically at 123' is located in a second, end (right) compartment 123 which, as mentioned above, is in communication with the central filter compartment 103 via the duct 105 through the bottom region of an associated dividing wall 120.

An outlet 114 for filtered and heated diesel oil extends through the outer wall of the housing 102.

The mating surfaces of the cover 108 and the corresponding top ends of the walls 102, 110, 120 of the housing 102 are provided with suitable sealing means 130, to provide fluid-tight seals therebetween.

Also, the heating elements 113' and 123' are again of the electrical resistance type and are thermostatically controlled, with an electronic management unit 140 being provided on the top of the cover 108 and being retained in place by releasable clips 150. A sensor, shown diagrammatically at 160, provides measurement of the flow rate of diesel oil passing through the filter device 101, whilst the two heating elements 113' and 123' have respective connecting terminals at 170. A drain plug 180 is provided in a drain 190 in the bottom wall of the housing 102.

The heating element 113' is operated at a low power requirement of, say, 30 amps (minimum) to 75 amps (maximum) to preheat diesel oil pumped into the compartment 113 of the filter device housing 102 via the inlet 111, prior to its being passed through the filter body 104. As discussed above, this preheating of the diesel oil not only reduces its viscosity but also contributes to the prevention of so-called "waxing" in cold weather conditions. Typically, the diesel oil is heated to approximately 120°C (minimum) to 250°C (maximum), depending upon the grade of oil, to reduce its viscosity by about 80% of its preheated value.

The heating element 113' is controlled thermostatically via an ambient temperature thermostat (not shown) located outside the diesel engine compartment of the associated vehicle and is advantageously sited in the front grill thereof. Also, it may be connected in circuit with another heating element (also not shown) located in the main diesel oil tank of the vehicle and with the ignition system of the vehicle engine, whereby the engine will only start when the diesel oil reaches running temperature.

The heating element 113' may be made of electrically-resistive nickel-copper mesh, a heating strip coiled around the inner wall of the associated compartment 113, or a heating rod. In each case, however, the heating element 113' is arranged to allow convection to take place.

The filter body 104 may comprise four discrete regions of sections of diminishing porosity, although it may be of continuously diminishing porosity ranging from, say, 10.0 microns down to 0.5 microns, and, as indicated above, may be made of a woven polypropylene filter medium thermally sealed and bonded to polypropylene end caps, core and cage (not shown) as a replaceable cartridge.

The other heating element 123' is also of any suitable form, for instance, a nickel-copper alloy, resistive heater, a heating strip coiled around the inner wall of the associated compartment 123, or a heating rod, and may be controlled thermostatically but independently of the heating element 113', to operate continuously while the associated diesel engine is running.

The other heating element 123' operates as a low power requirement of, say, 30 amps, with a high temperature output of approximately 120°C, the combustion temperature of the diesel fuel in the vehicle engine being in the region of 800°C. In any event, its function is to maintain the temperature of the filtered diesel oil at a predetermined level before it is pumped to the diesel engine of the vehicle. As in the case of the heating element 113', the operating temperature of the heating element is dependent upon the grade of diesel oil used and the particular application of the engine for which the diesel oil is used as fuel.

All the outer walls, and preferably the internal surfaces thereof of the compartments 113, 103 and 123 are thermally insulated for heat retention purposes, whilst the external surfaces thereof may be heat-reflective.

In use of the filter device 101, it is fitted in a fuel line between the diesel tank and injectors of the associated vehicle engine, with the inlet 111 being connected to the fuel pump and the outlet 114 being connected to the injector system.

In cold weather at, say, temperatures of 0°C and below, the heating element 113' and the heater in the diesel tank of the vehicle may be connected in circuit with each other to be controlled by a thermostat located in the front grill of the vehicle, to switch the heating element 113' and tank heater on and off as necessary As these are switched on, the temperature of the diesel oil is raised to a temperature of approximately 120°C prior to filtration, thereby reducing the viscosity of the oil, as well as its tendency to wax.

During warm weather, the heater in the diesel oil tank may be switched off but the heating element 113' may be controlled thermostatically at all times while the engine is running. Again, this preheats the diesel oil to reduce its viscosity before it is passed through the filter body 104.

With the diesel oil now heated and of a comparatively low viscosity, it is passed into the filter body 104 where it is filtered as it passes therethrough. Correspondingly-sized particles inherent in the diesel oil are removed and any water and/or other undesirable volatisable liquid in the diesel oil either tends to collect in the filter body 104 or to separate from the filtered diesel oil downstream of the filter body 104.

Any moisture in the diesel oil may be absorbed by a moisture-absorbing material in the form of a replacement gauze (not shown) located in the underside of the cover 108 and covering substantially the whole area thereof The replaceable, moisture-absorbing gauze is preferably held in place by means of a spring clip (also not shown) which recesses into the peripheral wall portion of the cover 108. The preferred thickness of the gauze in this particular case is about 4 millimetres.

The operating temperature of the other heating element 123' is approximately 120°C, such that substantially all of any water in the diesel oil is removed by being boiled off, with at least some being absorbed in the moisture-absorbing gauze in the underside of the cover 108.

Again, the presently high combustion ratio of existing engines can be greatly reduced, whilst any particles still remaining in the preheated and filtered diesel oil are burnt more efficiently as are other potential air pollutants, such as, carbon monoxide, nitrogen oxides and hydrocarbons.

The filter body 104 can be removed for cleaning or replacement by removing the cover 108 from the filter device housing 102. Removal of this cover 108 from the housing 102 also allows removal of the two heating elements 113' and 123' from their respective compartments 113, 123.

Re-assembly of the filter device 101 is carried out by reversing the steps described above.

The interior of the filter device 101 may be pressurised by any suitable means but a pressure line from the injection system of the engine of the associated vehicle is preferred.

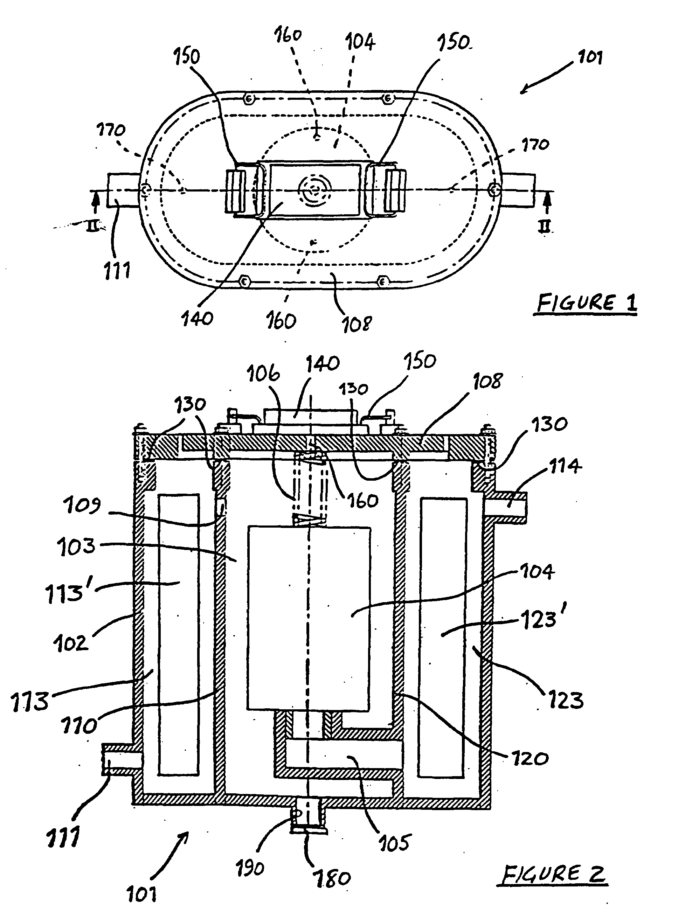

In the embodiment of filter device 101 described above in relation to Figures 1 and 2, the preferred minimum internal pressure rating of each device is 100 KPa, whilst the preferred maximum pressure rating is 500 KPa.

## Claims

1. An oil filter device (101) of unitary structure comprising filter means (104) through which oil to be filtered is passable and primary heating means (113') located upstream of said filter means (104) and arranged to heat the oil prior to its being passed through said filter means (104),
**characterised in that**
the device (101) includes secondary heating means (123') for further heating of the oil and
at least said filter means (104), said primary heating means (113') and said secondary heating means (123') are located in generally separate compartments (103, 113, 123) in a housing (102) of the device (101), the compartments (103, 113) being in communication with each other, to permit passage of the oil therethrough.

2. A unitary device (101) according to claim 1, wherein said primary heating means (113') is arranged to heat the oil to be filtered to a temperature of approximately 120°C to 250°.

3. A unitary device (101) according to claim 1 or 2 including means arranged to exhaust any undesirable and volatilised material from the device (101).

4. A unitary device (101) according to claim 1, 2 or 3, wherein said secondary heating means (123') is located downstream of said filter means (104).

5. A unitary device (101) according to claim 1, 2 or 3, wherein said secondary heating means (123') is located upstream of said filter means (104).

6. A unitary device (101) according to any preceding claim, wherein said secondary heating means (123') is arranged to volatilise any undesirable material present in the oil, for subsequent removal from the filter device (101).

7. A unitary device (101) according to any preceding claim, wherein at least the compartments (103, 113) in which said filter means (104) and said primary heating means (113') are located, are thermally insulated.

8. A unitary device (101) according to any preceding claim, wherein said filter means (104) is graduated to filter out particles of decreasing size from the oil.

9. A unitary device (101) according to claim 8, wherein said graduated filter means (104) comprises discrete regions of given mesh size.

10. A unitary device (101, 102) according to claim 8, wherein said graduated filter means (104) comprises a mass of filter material of continuously decreasing mesh size.

11. A unitary device (101) according to any preceding claim including a moisture-absorbing material for removing substantially all of any water or moisture in the oil being filtered.

12. A unitary device (101) according to claim 11, wherein the moisture-absorbing material is in the form of a replaceable gauze thereof

13. A unitary device (101) according to any preceding claim, wherein the interior of the device (101) is capable of being pressurised.

14. A unitary device (101) according to any preceding claim, wherein said filter means (104) is removable from the housing (102) for cleaning or replacement.

15. A unitary device (101) according to any preceding claim, wherein said primary and secondary heating means (113', 123') are removable from the housing (102).

16. A method of filtering oil wherein the oil to be filtered is passed through a unitary structure and is heated by primary heating means (113') contained in the structure prior to its being passed through filter means (104) also contained in the structure,
**characterised in that**
the oil is heated further by secondary heating means, (123', 223') contained in the unitary structure and
at least said filter means (104), said primary heating means (113') and said secondary heating means (123') are provided in generally separate compartments (103, 113, 123) in a housing (102) of the device (101), the compartments (103, 113, 123) being in communication with each other, to permit passage of the oil therethrough.

17. A method according to claim 16, wherein the oil is heated further by said secondary heating means before, during or after it has been passed through said filter means (104).

18. A method according to claim 16 or 17, wherein the oil is heated by said primary heating means (113') to a temperature of approximately 120°C to 250°C.

19. A method according to claim 16, 17 or 18, wherein substantially all of any water or moisture in the oil being passed through said filter means (104) is removed by a moisture-absorbing material.

## Patentansprüche

1. Ölfiltervorrichtung (101) mit einheitlichem Aufbau, die aufweist: eine Filtereinrichtung (104), durch die Öl, das gefiltert werden soll, fließen kann, und eine erste Heizeinrichtung (113'), die stromaufwärts der Filtereinrichtung (104) platziert und dazu ausgebildet ist, das Öl vor seinem Durchlauf durch die Filtereinrichtung (104) zu erwärmen,
**dadurch gekennzeichnet, dass**
die Vorrichtung (101) eine zweite Heizeinrichtung (123') beinhaltet, um das Öl noch mehr zu erwärmen, und
zumindest die Filtereinrichtung (104), die erste Heizeinrichtung (113') und die zweite Heizeinrichtung (123')in im allgemeinen getrennten Abteilungen (103, 113, 123) in einem Gehäuse (102) der Vorrichtung (101) untergebracht sind, wobei die Abteilungen miteinander in Verbindung stehen, um den Durchlauf des Öls durch sie hindurch zu ermöglichen.

2. Einheitliche Vorrichtung (101) nach Anspruch 1, worin die erste Heizeinrichtung (113') dazu ausgebildet ist, das zu filternde Öl auf eine Temperatur von ungefähr 120°C bis 250°C zu erwärmen.

3. Einheitliche Vorrichtung (101) nach Anspruch 1 oder 2, die eine Einrichtung beinhaltet, die dazu ausgebildet ist, um irgendwelches unerwünschtes und flüchtig gemachtes Material aus der Vorrichtung (101) auszulassen.

4. Einheitliche Vorrichtung (101) nach Anspruch 1, 2 oder 3, worin die zweite Heizeinrichtung (123') stromabwärts der Filtereinrichtung (104) platziert ist.

5. Einheitliche Vorrichtung (101) nach Anspruch 1, 2, oder 3, worin die zweite Heizeinrichtung (123') stromaufwärts der Filtereinrichtung (104) platziert ist.

6. Einheitliche Vorrichtung (101) nach einem der vorhergehenden Ansprüche, worin die zweite Heizeinrichtung (123') dazu ausgebildet ist, um irgendwelches unerwünschtes Material, das sich im Öl befindet, zum Verdampfen für ein nachfolgendes Entfernen aus der Filtereinrichtung (101) zu bringen.

7. Einheitliche Vorrichtung (101) nach einem der vorangehenden Ansprüche, worin zumindest die Abteilungen (103, 113), in denen die Filtereinrichtung (104) und die erste Heizeinrichtung (113') platziert sind, thermisch isoliert sind.

8. Einheitliche Vorrichtung (101) nach einem der vorangehenden Ansprüche, worin die Filtereinrichtung (104) abgestuft ist, um Partikel von abnehmender Größe aus dem Öl zu filtern.

9. Einheitliche Vorrichtung (101) nach Anspruch 8, worin die abgestufte Filtereinrichtung aus einzelnen Teilen bestehende Bereiche einer vorgegebenen Maschengröße aufweist.

10. Einheitliche Vorrichtung (101,102) nach Anspruch 8, worin die abgestufte Filtereinrichtung (104) eine Masse von Filtermaterial von kontinuierlich abnehmender Maschengröße aufweist.

11. Einheitliche Vorrichtung (101) nach einem der vorangehenden Ansprüche, die ein feuchtigkeitsabsorbierendes Material zur Entfernung von im wesentlichen allem Wasser oder aller Feuchtigkeit aus dem zu filternden Öl aufweist.

12. Einheitliche Vorrichtung (101) nach Anspruch 11, worin das feuchtigkeitsabsorbierende Material in Form einer auswechselbaren Gaze vorhanden ist.

13. Einheitliche Vorrichtung (101) nach einem der vorangehenden Ansprüche, worin das Innere der Vorrichtung (101) unter Druck gesetzt werden kann.

14. Einheitliche Vorrichtung (101) nach einem der vorangehenden Ansprüche, worin die Filtereinrichtung (104) aus dem Gehäuse (102) zum Reinigen oder Ersetzen entfembar ist.

15. Einheitliche Vorrichtung (101) nach einem der vorangehenden Ansprüche, worin die erste und zweite Heizeinrichtung (113', 123') aus dem Gehäuse (102) entfernbar sind.

16. Verfahren zum Filtern von Öl, wobei das zu filternde Öl durch eine einheitliche Struktur durchgeleitet und durch eine in der Struktur vorhandene erste Heizeinrichtung (113') vor seinem Durchgang durch eine Filtereinrichtung (104), die ebenfalls in der Struktur vorhanden ist, erwärmt wird.
**dadurch gekennzeichnet, dass**
das Öl durch eine zweite Heizeinrichtung (123', 223') weiter erwärmt wird, die in der einheitlichen Struktur enthalten ist, und
zumindest die Filtereinrichtung (104), die erste Heizeinrichtung (113') und die zweite Heizeinrichtung (123') in im allgemeinen getrennten Abteilungen (103, 113, 123) in einem Gehäuse (102) der Vorrichtung (101) vorgesehen werden, wobei die Abteilungen (103, 113, 123) in Verbindung mit einander stehen, um den Durchgang des Öls durch diese zu ermöglichen.

17. Verfahren nach Anspruch 16, wobei das Öl bevor, während oder nachdem es durch die Filtereinrichtung (104) durchgeleitet wird, weiter durch die zweite Heizeinrichtung erwärmt wird.

18. Verfahren nach Anspruch 16 oder 17, wobei das Öl von der ersten Heizeinrichtung (113') auf eine Temperatur von ungefähr 120°C bis 250°C erwärmt wird.

19. Verfahren nach Anspruch 16, 17 oder 18, wobei im wesentlichen alles Wasser oder alle Feuchtigkeit, die in dem Öl vorhanden sind, das durch die Filtereinrichtung (104) durchgeleitet wird, durch ein feuchtigkeitsabsorbierendes Material entfernt wird.

## Revendications

1. Dispositif à filtre à huile (101) d'une structure unitaire comprenant un moyen filtre (104), dans lequel l'huile à filtrer peut passer et un moyen primaire de chauffage (113') situé en amont dudit moyen filtre (104) et prévu pour chauffer l'huile avant de la faire passer dans ledit moyen filtre,
**caractérisé en ce que**
le dispositif (101) comporte un moyen secondaire de chauffage (123') pour encore chauffer l'huile, et
au moins lesdits moyen filtre (104), moyen primaire de chauffage (113') et moyen secondaire de chauffage (123') sont situés dans des compartiments, en général, séparés (103, 113, 123) dans un logement (102) du dispositif (101), les compartiments (103, 113) communiquant entre eux pour permettre le passage de l'huile à travers eux.

2. Dispositif unitaire (101) suivant la revendication 1, dans lequel ledit moyen primaire de chauffage (113') est prévu pour chauffer l'huile à filtrer à une température allant environ de 120° C à 250° C.

3. Dispositif unitaire (101) suivant la revendication 1 ou 2, comprenant un moyen pour évacuer tout matériau indésirable et volatilisé du dispositif (101).

4. Dispositif unitaire (101) suivant la revendication 1, 2 ou 3, dans lequel ledit moyen secondaire de chauffage (123') est situé en aval dudit moyen filtre (104).

5. Dispositif unitaire (101) suivant la revendication 1, 2 ou 3, dans lequel ledit moyen secondaire de chauffage (123') est situé en amont dudit moyen filtre (104).

6. Dispositif unitaire (101) suivant l'une quelconque des revendications précédentes, dans lequel ledit moyen secondaire de chauffage (123') est prévu pour volatiliser tout matériau indésirable présent dans l'huile, pour ensuite le supprimer du moyen filtre (101).

7. Dispositif unitaire (101) suivant l'une quelconque des revendications précédentes, dans lequel sont thermiquement isolés au moins les compartiments (103, 113) dans lesquels sont situés lesdits moyen filtre (104) et moyen primaire de chauffage (113').

8. Dispositif unitaire (101) suivant l'une quelconque des revendications précédentes, lequel ledit moyen filtre (104) est graduel pour filtrer des particules de dimensions décroissantes de l'huile.

9. Dispositif unitaire (101) suivant la revendication 8, dans lequel ledit moyen filtre graduel (104) comprend des régions discrètes de maillages donnés.

10. Dispositif unitaire (101, 102) suivant la revendication 8, dans lequel ledit moyen filtre graduel comprend une masse de matière de filtrage à maillage continuellement décroissant.

11. Dispositif unitaire (101) suivant l'une quelconque des revendications précédentes, comprenant une matière absorbant l'humidité pour supprimer pratiquement toute trace d'eau ou d'humidité dans l'huile filtrée.

12. Dispositif unitaire (101) suivant la revendication 11, dans lequel la matière absorbant l'humidité est sous forme de gaz que l'on peut remplacer.

13. Dispositif unitaire (101) suivant l'une quelconque des revendications précédentes, dans lequel l'intérieur du dispositif (101) peut être pressurisé.

14. Dispositif unitaire (101) suivant l'une quelconque des revendications précédentes, dans lequel ledit moyen filtre (104) peut être enlevé du logement (102), pour le nettoyer ou le remplacer.

15. Dispositif unitaire (101) suivant l'une quelconque des revendications précédentes, dans lequel lesdits moyen primaire de chauffage et moyen secondaire de chauffage (113', 123') peuvent être enlevés du logement (102).

16. Méthode de filtrage d'huile, dans laquelle l'huile à filtrer passe dans une structure unitaire et est chauffée par un moyen primaire de chauffage (113') contenu dans la structure avant de la faire passer dans un moyen filtre (104) contenu aussi dans la structure,
**caractérisée en ce que**
l'huile est encore filtrée par un moyen secondaire de chauffage (123', 223') contenu dans la structure unitaire, et
au moins lesdits moyen filtre (104), moyen primaire de chauffage (113') et moyen secondaire de chauffage (123') sont prévus dans des compartiments, en général, séparés (103, 113, 123) dans un logement (102) du dispositif (101), les compartiments (103, 113, 123) communiquant entre eux pour permettre le passage de l'huile à travers eux.

17. Méthode suivant la revendication 16, dans laquelle l'huile est encore chauffée par ledit moyen secondaire de chauffage avant, pendant ou après qu'elle soit passée dans ledit moyen filtre (104).

18. Méthode suivant la revendication 16 ou 17, dans laquelle l'huile est chauffée par le moyen primaire de chauffage (113') à une température allant environ de 120° C à 250° C.

19. Méthode suivant la revendication 16, 17 ou 18, dans laquelle on supprime, au moyen d'une matière absorbant l'humidité, pratiquement toute trace d'eau ou d'humidité dans l'huile qui est passée dans ledit moyen filtre.
